# FASCICULE DE BREVET EUROPEEN

(11) **EP 2 080 004 B1**
(45) Date de publication et mention de la délivrance du brevet: **10.07.2013**
(21) Numéro de dépôt: 07858420.8
(22) Date de dépôt: 10.10.2007
(51) Int. Cl.: G01M 3/00, G01M 3/22, G01M 3/04

(54) **DISPOSITIF DE TRANSPORT D'UNE SUBSTANCE MUNI D'UN DETECTEUR OPTIQUE DE FUITE**
MIT EINER OPTISCHEN LECKERKENNUNG AUSGESTATTETE VORRICHTUNG ZUR FÖRDERUNG EINER SUBSTANZ
DEVICE FOR CONVEYING A SUBSTANCE PROVIDED WITH AN OPTICAL LEAK DETECTOR

(30) Priorité: 10.10.2006 FR 0608880
(43) Date de publication de la demande: 22.07.2009
(73) Titulaire: Genesis France, 92400 Courbevoie (FR)
(72) Inventeur: COUDRAY, Paul, F-34270 St Jean de Cuculle (FR); BIAGGI, Jean-Pascal, F-78170 La Celle Saint Cloud (FR)
(74) Mandataire: Bertrand, Didier
(86) Numéro de dépôt international: PCT/FR2007/001654
(87) Numéro de publication internationale: WO 2008/043915

(56) Documents cités:
- EP-A- 0 053 546
- EP-A- 0 780 623
- WO-A-02/082036
- US-A1- 2003 052 256
- US-A1- 2004 067 003

## Description

L'invention concerne les dispositifs de transport de substances, et en particulier les dispositifs de détection de fuites dans une conduite de transport de gaz ou de liquide.

Une conduite de gaz connue est munie de capteurs de température répartis sur sa longueur et disposés à l'extérieur de la conduite. La température du gaz à l'intérieur de la conduite étant de l'ordre de -160°C, lorsqu'un capteur de température subit une soudaine baisse de température, on détermine l'existence d'une fuite dans la conduite à proximité.

Cette conduite présente l'inconvénient de ne pas détecter ou localiser correctement des fuites de petites tailles ou présentant un trajet compliqué. Dans un tel cas, la variation de température au niveau des capteurs peut se révéler insuffisante pour la détection de la fuite.

Le document US2003/052256 divulgue une conduite de gaz équipée d'organes de détection mettant en oeuvre une fibre optique apte à fournir un signal lorsqu'elle est soumise à une contrainte mécanique provoquée par une fuite, tandis que le document US2004/067003 divulgue une simple fibre optique présentant les même propriétés.

De plus, devant le développement en cours des réseaux de transport de gaz, il existe un besoin pour des conduites présentant un contrôle de sécurité accru. Il existe notamment un besoin de détecter toute fuite de gaz ou toute variation suspecte de la température le long de la conduite. Ces moyens de contrôle doivent permettre de surveiller des fuites dans une conduite d'une longueur pouvant atteindre plusieurs kilomètres. Il existe également un besoin de localisation de fuites, ce qui est particulièrement avantageux pour intervenir sur des conduites de grandes longueurs.

L'invention vise à résoudre un ou plusieurs de ces inconvénients. L'invention porte ainsi sur un dispositif de transport d'une substance, comprenant :
- une première conduite destinée à contenir la substance;
- une fibre optique solidaire de la première conduite et s'étendant le long de cette conduite, la fibre optique présentant plusieurs organes de détection espacés sur sa longueur, chaque organe de détection présentant un spectre de réflexion distinct, variant en fonction de la présence de la substance à détecter ;
- un dispositif de contrôle présentant une source lumineuse apte à émettre une lumière dans le spectre de réflexion de chaque organe de détection, un récepteur lumineux apte à détecter l'amplitude d'une lumière dans le spectre de réflexion de chaque organe de détection, et un module d'analyse apte à déterminer la présence d'une fuite de la substance en fonction de l'amplitude lumineuse fournie par le récepteur lumineux.

Selon une variante, le dispositif comprend :
- un passage communiquant avec les différents organes de détection ;
- un dispositif de pompage apte à générer un flux de gaz dans le passage.

Selon encore une variante, le dispositif comprend :
- une gaine d'isolation thermique enrobant la première conduite et traversée par la fibre optique ;
- une deuxième conduite entourant la gaine d'isolation, formant avec la gaine le passage communiquant avec les organes de détection ;
- un dispositif de pompage, apte à faire circuler un flux de gaz inerte dans le passage.

Selon une autre variante, le dispositif comprend au moins un capteur de température associé à un organe de détection disposé sensiblement au même niveau suivant l'axe de la première conduite, le capteur de température étant connecté au dispositif de contrôle, le dispositif de contrôle étant apte à déterminer la présence de la substance au niveau d'un organe de détection en prenant en compte la température mesurée par son capteur associé.

Selon encore une autre variante, le dispositif comprend :
- une autre fibre optique solidaire de la première conduite et s'étendant le long de la première conduite ;
- un dispositif injectant une lumière dans cette autre fibre optique et déterminant la température en fonction de la variation des propriétés de cette autre fibre sur la lumière injectée.

Selon une variante, les organes de détection comprennent un réseau de Bragg englobé dans un matériau absorbant un gaz spécifique à détecter.

Selon encore une variante, ledit matériau englobant le réseau de Bragg absorbe le méthane.

Selon une autre variante, le module d'analyse est apte à déterminer la présence d'une fuite de la substance en fonction du décalage en longueur d'onde d'une lumière dont l'amplitude est fournie par le récepteur lumineux.

L'invention porte également sur un procédé de détection d'une fuite d'une conduite de transport d'une substance, comprenant les étapes suivantes :
- injecter par des impulsions successives, une lumière dans une fibre optique s'étendant le long de la conduite et présentant plusieurs organes de détection espacés sur sa longueur, chaque organe de détection présentant un spectre de réflexion distinct variant en fonction de la présence d'une substance à détecter, les impulsions successives de lumière couvrant le spectre de réflexion de chaque organe de détection ;
- détecter l'amplitude de lumière dans le spectre de réflexion de chaque organe de détection ;
- déterminer la présence d'une fuite de la substance à détecter en fonction de l'amplitude lumineuse détectée.

Selon une variante, l'étape de détermination de la présence d'une fuite de la substance est fonction de la détection d'un décalage de la longueur d'onde de la lumière détectée.

D'autres caractéristiques et avantages de l'invention ressortiront clairement de la description qui en est faite ci-après, à titre indicatif et nullement limitatif, en référence aux dessins annexés, dans lesquels :
- la figure 1 illustre une vue en coupe d'une conduite selon l'invention selon son axe ;
- la figure 2 illustre une vue en coupe de la conduite de la figure 1 perpendiculairement à son axe ;
- la figure 3 illustre une vue en coupe d'une première variante d'un organe de détection, utilisée avec la conduite des figures 1 et 2 ;
- la figure 4 illustre une vue en coupe d'une seconde variante d'un organe de détection ;
- les figures 5 à 8 illustrent différents diagrammes en entrée ou en sortie de la fibre, permettant de déterminer la présence d'une fuite dans la conduite.

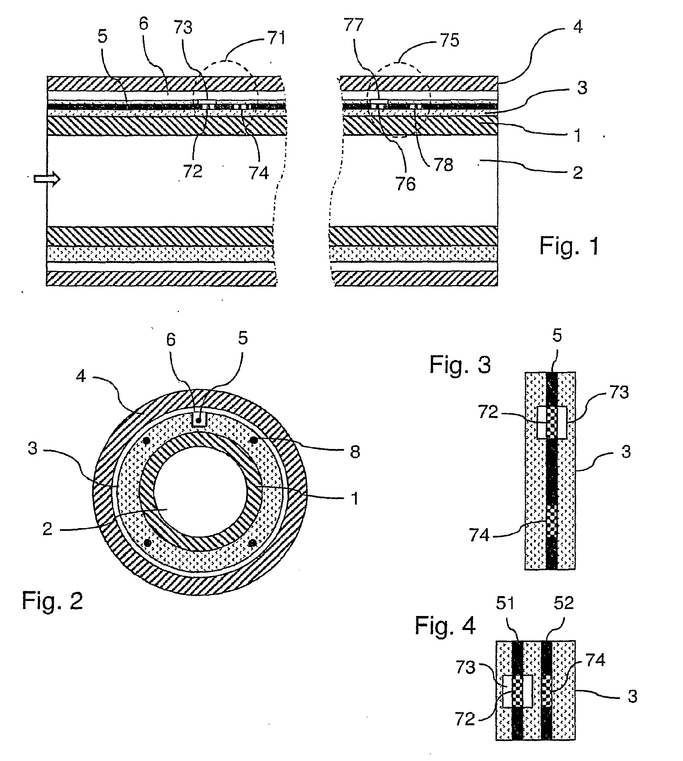

Les figures 1 et 2 illustrent un exemple de dispositif de transport de gaz auquel l'invention est appliquée. Ce dispositif comprend une première conduite 1 formant un volume intérieur 2 destiné à contenir et laisser s'écouler du gaz. La première conduite peut être une conduite rigide et être réalisée dans un matériau tel que de l'Invar. La première conduite 1 est enrobée dans une gaine d'isolation thermique 3, réalisée en matériau synthétique tel que celui commercialisé sous la dénomination Aerogel. Le gaz tel que le méthane liquide circulant parfois à des températures de l'ordre de -165°C, une telle gaine d'isolation 3 entre la première conduite 1 et l'environnement peut s'avérer nécessaire. La gaine 3 est entourée d'une deuxième conduite 4. Cette conduite 4 peut être formée dans un matériau tel que de l'acier au carbone ou de l'acier inoxydable. Une telle conduite 4 est utilisée en particulier si des normes imposent une double structure de confinement.

Une fibre optique 5 est solidarisée à la première conduite 1 et s'étend le long de cette conduite. La fibre optique 5 présente des organes de détection de fuite espacés sur sa longueur, dont les organes de détection 71 et 75.

Les organes de détection 71 et 75 sont de type discret et présentent respectivement des parties optiquement sensibles au gaz à détecter 72 et 76, et des parties optiques de référence 74 et 78 dans l'axe de la fibre optique 5. Des passages 73 et 77 sont ménagés dans la gaine 3 pour permettre un contact gazeux entre respectivement les parties sensibles 72 et 76 et un gaz ambiant. Les parties de référence 74 et 78 sont par contre isolées ou insensibles au gaz ambiant. La figure 3 illustre plus précisément l'organe de détection 71. La partie sensible 72 est ainsi mise en contact avec le gaz ambiant et verra ses propriétés optiques varier en fonction de la proportion du gaz auquel elle est sensible, dans ce gaz ambiant. La partie de référence 74 est rendue optiquement insensible à ce gaz, soit en n'utilisant pas un matériau sensible à ce gaz, soit en étant isolée du gaz ambiant. La partie de référence 74 permet ainsi de déterminer le décalage des propriétés optiques de la partie sensible 72. L'utilisation de la partie de référence 74 permet également de déterminer plus aisément un problème touchant la structure de la fibre optique ou sa source de lumière. Les organes de détection 71 et 75 peuvent être réalisés sous forme de composant optique intégré, dont les parties optiquement sensibles et optiquement insensibles sont réalisées avec un matériau présentant un indice de réfraction approchant celui de la fibre optique. Bien qu'on ait décrit une partie optiquement sensible au gaz, on peut également prévoir une partie sensible au contact d'un liquide donné.

Comme illustré aux figures 1 et 2, le dispositif de transport présente avantageusement un passage 6 communicant avec les parties sensibles des différents organes de détection. Un dispositif de pompage permet de générer un flux de gaz dans le passage 6. On peut forcer un flux de gaz inerte tel que de l'Argon ou de l'azote. Un tel flux de gaz permet de suivre dynamiquement l'évolution d'une fuite. En évacuant le gaz qui pourrait stagner au niveau de la partie sensible d'un organe de détection. Afin de maintenir les dimensions du passage 6 entre la gaine 3 et la deuxième conduite 4, le dispositif 1 peut être muni sur sa longueur de bagues rigides permettant à la deuxième conduite 4 de prendre appui sur la première conduite 1.

En lieu et place d'un composant optique intégré, les organes de détection de fuite peuvent être réalisés à partir de la fibre optique 5 dont on conserve la continuité. Pour cela, on peut envisager de retirer localement la gaine entourant le coeur de la fibre optique 5, puis d'enrober la partie découverte d'un matériau sensible au gaz à détecter.

L'utilisation d'une fibre optique pour la détection de fuite le long d'une conduite de gaz présente les avantages suivants : une insensibilité aux interférences électromagnétiques, une immunité dans des environnements avec une haute tension électrique, un fort bruit ou des températures extrêmes, une capacité de mesure répartie, une mesure absolue, une plage et une résolution de mesure importantes, une très grande vitesse de transmission d'information, une très grande capacité de transmission, un poids et un volume réduits, un fonctionnement ne nécessitant pas d'alimentation électrique au niveau des capteurs, une passivité chimique, un coût réduit par rapport à des capteurs électriques et de faibles pertes de propagation.

La figure 4 illustre une autre variante de géométrie d'un organe de détection. Dans cet exemple, deux portions de fibres optiques 51 et 52 s'étendent en parallèle. La portion de fibre 51 présentera dans sa continuité la partie optiquement sensible 72 disposée dans le passage 73, tandis que la portion de fibre 52 présentera dans sa continuité la partie de référence 74.

Un dispositif de contrôle non illustré sert de source lumineuse pour la fibre 5, mesure la lumière réfléchie ou transmise par la fibre 5, et détermine la présence d'une fuite du gaz recherché en fonction des variations des propriétés optiques d'un organe de détection. Pour interroger les différents organes de détection présentant des longueurs d'onde distinctives, le dispositif de contrôle utilisera avantageusement un multiplexage par répartition en longueur d'onde (WDM). Ainsi, la fuite de gaz peut non seulement être détectée très rapidement, mais de plus sa localisation précise peut être obtenue dans le même temps.

Dans une première variante, le dispositif de contrôle comprend un émetteur avec une source à large bande et présente un récepteur à longueur d'onde sélective. La longueur d'onde du récepteur est adaptée consécutivement pour chaque organe de détection que l'on souhaite interroger.

Dans une deuxième variante, le dispositif de contrôle émet consécutivement des impulsions présentant différentes longueurs d'onde depuis une source lumineuse réglable en longueur d'onde. Le dispositif de contrôle présente alors avantageusement un récepteur large bande.

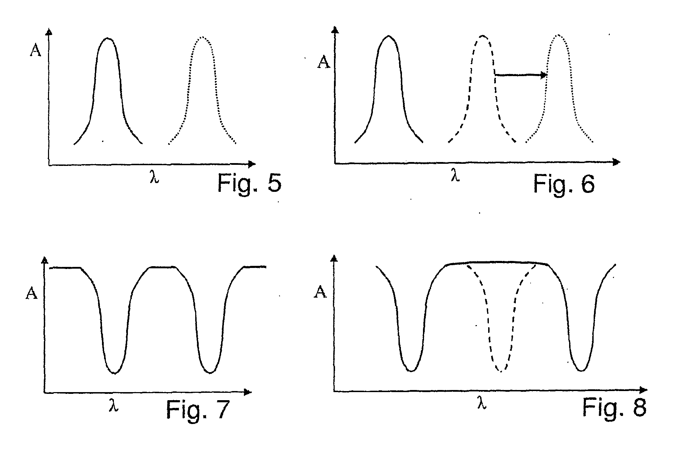

Les figures 5 à 8 illustrent des diagrammes de réflexion et de transmission utilisables pour déterminer la présence d'une fuite de gaz, lorsqu'une lumière à large spectre est injectée dans la fibre optique.

Les figures 5 et 6 illustrent l'intensité de lumière réfléchie en fonction de sa longueur d'onde. Les figures 7 et 8 illustrent l'intensité de lumière transmise en fonction de sa longueur d'onde.

La figure 5 correspond à une absence du gaz à détecter dans le gaz ambiant. A la figure 5, on a représenté à gauche une raie correspondant à la réflexion d'un réseau de Bragg de référence et à droite une raie correspondant à la réflexion d'un réseau de Bragg optiquement sensible au gaz à détecter. On constate à la figure 6, qu'en présence du gaz à détecter, le réseau de Bragg sensible a subi un décalage de sa longueur d'onde de réflexion.

Les figures 7 et 8 illustrent ce même décalage de longueur d'onde du réseau de Bragg sensible, vu du côté du spectre transmis par la fibre.

Les réponses en longueur d'onde des réseaux de Bragg appartenant à différents organes de détection seront configurées pour ne pas se chevaucher même lors d'un décalage de longueur d'onde induit par une variation de température : chaque capteur reste ainsi identifiable de façon unique sans ambiguïté. Les longueurs d'onde de réflexion des différents organes de détection peuvent être espacées de 20 à 25 nanomètres.

Pour une conduite d'une longueur de 2500 mètres, on peut envisager de disposer des organes de détection tous les 50 mètres. Pour des conduites de plus de 2500 mètres, on peut envisager une répartition similaire des organes de détection et disposer des amplificateurs optiques tous les 2500 mètres. Pour des longueurs importantes de conduite, on pourra intégrer des amplificateurs optiques en des emplacements intermédiaires de la fibre optique. Des amplificateurs EDFA (pour Erbium Doped Fiber Amplifiers) sont une solution particulièrement adaptée pour déporter l'alimentation électrique suffisamment loin de la conduite.

Pour des conduites de grandes dimensions, un mode de fabrication particulièrement avantageux peut être envisagé. On peut envisager d'assembler des tronçons de longueurs standard ensemble, afin de réduire le coût de fabrication d'une conduite et de pouvoir ajuster aisément sa longueur. Chaque tronçon peut par exemple présenter une longueur de 12 ou 24 mètres par exemple.

Pour cela, on peut partir d'une première conduite de la longueur standard souhaitée. Sur cette conduite, on peut mouler une première couche d'Aerogel. On pourra éviter d'enrober les extrémités de la première conduite avec la première couche d'Aerogel, afin de permettre leur soudage. On dispose les fibres optiques destinées aux mesures de température ou de contrainte sur l'Aerogel. On moule une seconde couche d'Aerogel pour enrober la première couche et les fibres optiques. On dispose ensuite la fibre optique devant être munie des organes de détection de fuite à la périphérie de la seconde couche d'Aerogel. Avantageusement, on soude alors la première conduite de deux tronçons successifs, on enrobe la soudure dans de l'Aerogel pour garantir une isolation également à ce niveau, puis on peut former un organe de détection de fuite à la jonction des tronçons. L'organe de détection est avantageusement formé après avoir réalisé les soudures, ce qui évite de l'endommager durant la soudure des premières conduites.

Avantageusement, on place les organes de détection de fuite au niveau des extrémités des tronçons. Leur vérification, leur assemblage et leur éventuel remplacement sont ainsi grandement facilités. On peut ainsi envisager de placer aisément un organe de détection au niveau de chaque jonction de tronçons. Un tel agencement n'est pas trop pénalisant optiquement, les assemblages de fibre optique présentant dorénavant des niveaux de perte assez réduits. Le contrôle de la partie optique d'une conduite peut ainsi être effectué au fur et à mesure de son montage.

La fibre optique munie de ses organes de détection de fuite peut être placée dans une rainure usinée dans la couche supérieure d'Aerogel. Une rainure peut également être formée en utilisant des coquilles de moulage de forme adéquate.

Les organes de détection de gaz peuvent par exemple être des détecteurs commercialisés par la société Kloé sous la dénomination K-MZS. Un tel détecteur fonctionne selon le principe interférométrique de Mach-Zehnder. Un tel organe de détection est réalisé sous la forme de composant optique intégré. Une branche (partie sensible) est munie d'un revêtement sensible à un gaz spécifique par absorption. Son indice de réfraction change en fonction de la quantité absorbée dudit gaz. Une autre branche (partie de référence) est munie d'un revêtement insensible au gaz, ayant une puissance optique de sortie stable.

Un autre type d'organe de détection, correspondant par exemple à celui illustré à la figure 3, est formé d'un composant optique intégré. Dans ce composant optique, deux réseaux de Bragg sont photoimprimés en série. Un premier réseau de Bragg est mis en contact avec le gaz environnant et présente un revêtement sensible à un gaz spécifique, comme décrit précédemment. La réponse en longueur d'onde du réseau de Bragg variera ainsi en fonction de la présence du gaz à détecter. Un deuxième réseau de Bragg est isolé du gaz à détecter, en utilisant par exemple un revêtement neutre, insensible au gaz à détecter. Une telle configuration permet de n'utiliser qu'une fibre optique pour la détection de fuite le long de la conduite.

Un réseau de Bragg est un filtre ayant une sélectivité en longueur d'onde, formé par l'introduction d'une structure à indice de réfraction périodique dans le coeur d'une fibre optique. Lorsqu'un faisceau lumineux à large bande est transmis dans la fibre, le réseau de Bragg réfléchit la lumière correspondant à sa longueur d'onde et transmet le reste du spectre incident.

Le réseau de Bragg peut être inscrit dans un composant optique intégré, selon des procédés connus en soi. La demande de brevet EP-1 300 704 décrit un procédé d'inscription d'un réseau de Bragg par écriture d'une couche photosensible sur un substrat au moyen d'un laser. Le réseau de Bragg peut être écrit dans un matériau élaboré par la voie sol-gel. L'organe de détection peut être réalisé sous forme de composant optique intégré et être assemblé à la fibre optique, comme détaillé dans la demande de brevet EP-1 441 018.

Des fibres optiques peuvent être utilisées pour former des capteurs de température 8. Cette fibre optique peut présenter des réseaux de Bragg répartis sur sa longueur. En effet, les réseaux de Bragg présentent une longueur d'onde de réflexion qui est fonction de leur température. Le décalage en longueur d'onde est généralement de l'ordre de 10pm/°C. Comme pour les organes de détection, chaque réseau de Bragg formant un capteur de température présentera une longueur d'onde distinctive qui permettra au dispositif de contrôle de l'identifier de façon unique.

La température fournie par un capteur peut être utilisée par le dispositif de contrôle pour corriger la mesure par l'organe de détection de gaz associé.

On peut également envisager que les fibres optiques 8 soient utilisées pour effectuer des détections de contraintes locales.

On peut utiliser une fibre optique 5 telle que celle commercialisée sous la référence SMF-28(e) par la société Corning. Il s'agit d'une fibre monomode dont l'atténuation à environ 1380 nm est particulièrement réduite. Il s'agit d'une fibre dite plein-spectre (appelée full-spectrum en langue anglaise), pouvant être utilisée sans pic d'atténuation sur le spectre 1260-1600 nanomètres.

La fibre optique peut être recouverte d'un revêtement en acrylate ou en polyimide jusqu'à un diamètre de 250µm. Un second revêtement jusqu'à un diamètre de 900µm peut être déposé. Une tresse en kevlar peut entourer le second revêtement. Une gaine de 3 millimètres de polyuréthane peut recouvrir cette tresse.

En particulier, pour la détection de méthane, les revêtements et matériaux dont l'indice de réfraction est sensible à la présence de ce gaz peuvent être basées sur l'utilisation de ZnO ou de SnO₂.

En complément, une fibre optique peut être utilisée pour réaliser une détection de fuite de gaz en continu sur toute la longueur de la fibre. Pour cela, on peut détecter le décalage des raies de diffusion de Raman d'une fibre optique, induit par les variations de températures liées à une fuite du gaz provenant de la première conduite. Par rapport à la raie de diffusion de Rayleigh, principale source de diffusion dans l'organe de détection, deux raies de Raman apparaissent à des longueurs d'onde respectivement inférieure et supérieure à la longueur d'onde de la raie de Rayleigh. La diffusion de Raman n'est pas élastique, c'est-à-dire que la longueur d'onde de la radiation de diffusion est différente de celle de la lumière incidente. Après avoir impulsé une lumière dans une entrée de la fibre optique, on détecte la lumière diffusée en direction de cette entrée de la fibre.

Cette détection peut être utilisée en supplément de la détection de gaz discrète décrite précédemment afin d'accroître sa fiabilité.

## Revendications

1. Dispositif de transport d'une substance, comprenant :
- une première conduite (1) destinée à contenir la substance;
- **caractérisé en ce qu'**il comprend en outre:
- une fibre optique (5) solidaire de la première conduite (5) et s'étendant le long de cette conduite, la fibre optique (5) présentant plusieurs organes de détection (71, 75) espacés sur sa longueur, chaque organe de détection présentant un spectre de réflexion distinct, variant en fonction de la présence de la substance à détecter ;
- un dispositif de contrôle présentant une source lumineuse apte à émettre une lumière dans le spectre de réflexion de chaque organe de détection, un récepteur lumineux apte à détecter l'amplitude d'une lumière dans le spectre de réflexion de chaque organe de détection, et un module d'analyse apte à déterminer la présence d'une fuite de la substance en fonction de l'amplitude lumineuse fournie par le récepteur lumineux.

2. Dispositif de transport d'une substance selon la revendication 1, comprenant :
- un passage (6) communiquant avec les différents organes de détection ;
- un dispositif de pompage apte à générer un flux de gaz dans le passage (6).

3. Dispositif de transport d'une substance selon la revendication 2, comprenant :
- une gaine d'isolation thermique (3) enrobant la première conduite et traversée par la fibre optique (5) ;
- une deuxième conduite (4) entourant la gaine d'isolation (3), formant avec la gaine le passage (6) communiquant avec les organes de détection ;
- un dispositif de pompage, apte à faire circuler un flux de gaz inerte dans le passage.

4. Dispositif de transport d'une substance selon l'une quelconque des revendications précédentes, comprenant au moins un capteur de température associé à un organe de détection disposé sensiblement au même niveau suivant l'axe de la première conduite, le capteur de température étant connecté au dispositif de contrôle, le dispositif de contrôle étant apte à déterminer la présence de la substance au niveau d'un organe de détection en prenant en compte la température mesurée par son capteur associé.

5. Dispositif de transport d'une substance selon l'une quelconque des revendications 1 à 3, comprenant :
- une autre fibre optique (8) solidaire de la première conduite (1) et s'étendant le long de la première conduite ;
- un dispositif injectant une lumière dans cette autre fibre optique et déterminant la température en fonction de la variation des propriétés de cette autre fibre sur la lumière injectée.

6. Dispositif de transport d'une substance selon l'une quelconque des revendications précédentes, dans lequel les organes de détection comprennent un réseau de Bragg englobé dans un matériau absorbant un gaz spécifique à détecter.

7. Dispositif de transport d'une substance selon la revendication 6, dans lequel ledit matériau englobant le réseau de Bragg absorbe le méthane.

8. Dispositif de transport d'une substance selon l'une quelconque des revendications précédentes, dans lequel le module d'analyse est apte à déterminer la présence d'une fuite de la substance en fonction du décalage en longueur d'onde d'une lumière dont l'amplitude est fournie par le récepteur lumineux.

9. Procédé de détection d'une fuite d'une conduite de transport d'une substance, **caractérisé en ce qu'**il comprend les étapes suivantes :
- injecter par des impulsions successives, une lumière dans une fibre optique s'étendant le long de la conduite et présentant plusieurs organes de détection espacés sur sa longueur, chaque organe de détection présentant un spectre de réflexion distinct variant en fonction de la présence d'une substance à détecter, les impulsions successives de lumière couvrant le spectre de réflexion de chaque organe de détection ;
- détecter l'amplitude de lumière dans le spectre de réflexion de chaque organe de détection ;
- déterminer la présence d'une fuite de la substance à détecter en fonction de l'amplitude lumineuse détectée.

10. Procédé de détection d'une fuite d'une conduite de gaz selon la revendication 9, dans lequel l'étape de détermination de la présence d'une fuite de la substance est fonction de la détection d'un décalage de la longueur d'onde de la lumière détectée.

## Patentansprüche

1. Vorrichtung für den Transport einer Substanz, umfassend:
- eine erste Leitung (1), die dafür bestimmt ist, die Substanz zu enthalten;
- **dadurch gekennzeichnet, dass** sie ferner Folgendes umfasst:
- einen Lichtwellenleiter (5), der mit der ersten Leitung (5) fest verbunden ist und sich entlang dieser Leitung erstreckt, wobei der Lichtwellenleiter (5) mehrere Detektionsorgane (71, 75) aufweist, die über seine Länge beabstandet sind, wobei jedes Detektionsorgan ein anderes Reflexionsspektrum aufweist, das in Abhängigkeit vom Vorhandensein der zu detektierenden Substanz variiert,
- eine Überwachungsvorrichtung mit einer Lichtquelle, die für das Aussenden eines Lichts in dem Reflexionsspektrum jedes Detektionsorgans geeignet ist, einem Lichtempfänger, der für das Detektieren der Amplitude eines Lichts in dem Reflexionsspektrum jedes Detektionsorgans geeignet ist, und einem Analysemodul, das für das Feststellen des Vorhandenseins eines Austritts der Substanz in Abhängigkeit von der Lichtamplitude, die durch den Lichtempfänger bereit gestellt wird, geeignet ist.

2. Vorrichtung für den Transport einer Substanz nach Anspruch 1, umfassend:
- einen Durchgang (6), der mit den verschiedenen Detektionsorganen kommuniziert;
- eine Pumpvorrichtung, die dafür geeignet ist, einen Gasstrom in dem Durchgang (6) zu erzeugen.

3. Vorrichtung für den Transport einer Substanz nach Anspruch 2, umfassend:
- eine thermisch isolierende Hülle (3), welche die erste Leitung umhüllt und von dem Lichtwellenleiter (5) durchquert wird,
- eine zweite Leitung (4), welche die Isolierhülle (3) umgibt und mit der Hülle den Durchgang (6) bildet, der mit den Detektionsorganen kommuniziert;
- eine Pumpvorrichtung, die dafür geeignet ist, einen inerten Gasstrom in dem Durchgang umlaufen zu lassen.

4. Vorrichtung für den Transport einer Substanz nach einem der vorhergehenden Ansprüche, umfassend zumindest einen Temperaturfühler, der einem Detektionsorgan zugeordnet ist, das in der Achse der ersten Leitung im Wesentlichen auf der gleichen Höhe angeordnet ist, wobei der Temperaturfühler an die Überwachungsvorrichtung angeschlossen ist, wobei die Überwachungsvorrichtung dafür geeignet ist, unter Berücksichtigung der durch ihren zugeordneten Fühler gemessenen Temperatur das Vorhandensein der Substanz im Bereich eines Detektionsorgans festzustellen.

5. Vorrichtung für den Transport einer Substanz nach einem der Ansprüche 1 bis 3, umfassend:
- einen weiteren Lichtwellenleiter (8), der mit der ersten Leitung (1) fest verbunden ist und sich entlang der ersten Leitung erstreckt;
- eine Vorrichtung, die ein Licht in diesen weiteren Lichtwellenleiter einkoppelt und die Temperatur in Abhängigkeit von der Veränderung der Eigenschaften dieses anderen Lichtwellenleiters über das eingekoppelte Licht feststellt.

6. Vorrichtung für den Transport einer Substanz gemäß einem der vorhergehenden Ansprüche, wobei die Detektionsorgane ein Bragg-Netz umfassen, das in einem Material enthalten ist, das ein spezifisches Gas, das detektiert werden soll, absorbiert.

7. Vorrichtung für den Transport einer Substanz nach Anspruch 6, wobei das Material, welches das Bragg-Netz enthält, Methan absorbiert.

8. Vorrichtung für den Transport einer Substanz nach einem der vorhergehenden Ansprüche, wobei das Analysemodul für das Feststellen des Vorhandenseins eines Austritts der Substanz in Abhängigkeit von der Wellenlängenverschiebung eines Lichts, dessen Amplitude durch den Lichtempfänger bereit gestellt wird, geeignet ist.

9. Verfahren zum Detektieren einer Leckage einer Leitung für den Transport einer Substanz, **dadurch gekennzeichnet, dass** es die folgenden Schritte umfasst:
- Einkoppeln, durch aufeinanderfolgende Impulse, eines Lichts in einen Lichtwellenleiter, der sich entlang der Leitung erstreckt und mehrere Detektionsorgane aufweist, die über seine Länge beabstandet sind, wobei jedes Detektionsorgan ein anderes Reflexionsspektrum aufweist, das in Abhängigkeit vom Vorhandensein einer zu detektierenden Substanz variiert, wobei die aufeinanderfolgenden Lichtimpulse das Reflexionsspektrum jedes Detektionsorgans abdecken;
- Detektieren der Lichtamplitude in dem Reflexionsspektrum jedes Detektionsorgans;
- Feststellen des Vorhandenseins eines Austritts der zu detektierenden Substanz in Abhängigkeit von der detektierten Lichtamplitude.

10. Verfahren zum Detektieren einer Leckage einer Gasleitung, nach Anspruch 9, wobei der Schritt des Feststellens des Vorhandenseins eines Austritts der Substanz eine Funktion der Detektion einer Wellenlängenverschiebung des detektierten Lichts ist.

## Claims

1. A device for transporting a substance, comprising:
- a first pipe (1) for containing the substance; **characterized in that** it also comprises:
- an optical fiber (5) connected to the first pipe (5) and extending along said pipe, the optical fiber (5) including several detection members (71, 75) spaced along its length, each detection member having a separate reflection spectrum that varies with the presence of the substance to be detected;
- a control device including a light source capable of emitting a light in the reflection spectrum of each detection member, a light receiver capable of detecting the light amplitude in the reflection spectrum of each detection member, and an analysis module capable of determining the presence of a leak of the substance based on the light amplitude provided by the light receiver.

2. The device for transporting a substance as claimed in claim 1, comprising:
- a passage (6) communicating with the various detection members;
- a pumping device able to generate a flow of gas in the passage (6).

3. The device for transporting a substance as claimed in claim 2, comprising:
- a thermal insulation sheath (3) coating the first pipe and passed through by the optical fiber (5);
- a second pipe (4) surrounding the insulation sheath (3), forming with the sheath the passage (6), communicating with the detection members;
- a pumping device able to cause a flow of inert gas to circulate in the passage.

4. The device for transporting a substance as claimed in any one of the preceding claims, comprising at least one temperature sensor associated with a detection member positioned roughly at the same level on the axis of the first pipe, the temperature sensor being connected to the control device, the control device being able to determine the presence of the substance at the level of a detection member by taking into account the temperature measured by its associated sensor.

5. The device for transporting a substance as claimed in any one of claims 1 to 3, comprising:
- another optical fiber (8) connected to the first pipe (1) and extending along the first pipe;
- a device injecting a light into this other optical fiber and determining the temperature according to the variation of the properties of this other fiber in response to the injected light.

6. The device for transporting a substance as claimed in any one of the preceding claims, in which the detection members comprise a Bragg grating encompassed in a material absorbing a specific gas to be detected.

7. The device for transporting a substance as claimed in claim 6, in which said material encompassing the Bragg grating absorbs methane.

8. The device for transporting a substance as claimed in any one of the preceding claims, in which the analysis module is able to determine the presence of a leak of the substance according to the shift in wavelength of a light whose amplitude is provided by the light receiver.

9. A method of detecting a leak from a pipe transporting a substance, comprising the following steps:
- injecting, by successive pulses, a light into an optical fiber extending along the pipe and including several detection members spaced along its length, each detection member having a distinct reflection spectrum varying with the presence of a substance to be detected, the successive light pulses covering the reflection spectrum of each detection member;
- detecting the light amplitude in the reflection spectrum of each detection member;
- determining the presence of a leak of the substance to be detected according to the detected light amplitude.

10. The method of detecting a leak from a gas pipe as claimed in claim 9, in which the step for determining the presence of a leak of the substance depends on the detection of a shift in the wavelength of the detected light.
